# EUROPEAN PATENT APPLICATION

(11) **EP 3 553 654 A1**
(43) Date of publication of application: **16.10.2019**
(21) Application number: 19167712.9
(22) Date of filing: 05.04.2019
(51) Int. Cl.: G06F 9/445, G08G 5/00, H04B 7/185

(54) **AVIONICS DATA ACCESS FUNCTION**

(30) Priority: 09.04.2018 US 201862606154 P; 12.04.2018 US 201815952190
(71) Applicant: Honeywell International Inc., Morris Plains, NJ New Jersey 07950 (US)
(72) Inventor: SELVARAJAN, Ravikumar, Morris Plains, NJ New Jersey 07950 (US); SARKAR, Partho, Morris Plains, NJ New Jersey 07950 (US); WALTER, Brian, Morris Plains, NJ New Jersey 07950 (US); DAIRMAN, Charles, Morris Plains, NJ New Jersey 07950 (US)
(74) Representative: Houghton, Mark Phillip

(57) **Abstract**

A system is disclosed for facilitating communications between certified on-board avionics control functions and one or more uncertified remote client applications. The system includes an avionics data access function (ADAF), which acts as a multi-mode data acquisition agent for the onboard avionics control functions and serves the requests from the remote client applications. In some cases, ADAF comprises a separate space- and time-partitioned module, which handles retrieving data from the onboard avionics and transmitting the data to the remote client application(s) in the appropriate format.

## Description

### BACKGROUND

Current avionics architectures generally include a number of FAA-certified on-board avionics control functions, such as flight management systems, which are secured so as to obey given constraints of integrity and availability. Frequently, such certified on-board avionics control functions are segregated from non-FAA-certified devices and applications, such as laptop computers, etc., which are not sufficiently secure to be integrated into the avionics control functions.

Due to this segregation, functions performed in the cockpit by uncertified applications and devices have limited integration with the avionics control functions, which greatly reduces their utility. The limited integration can cause flight crew members to juggle between the certified avionics control functions and one or more uncertified computing devices while in the cockpit. The juggling often includes manually transferring information back and forth between the certified avionics control functions and the uncertified computing device(s), which creates extra work for the crew and a risk of a data error occurring during the transfer.

### SUMMARY

Developers in the aerospace industry have prioritized increasing connectivity between the certified avionics control functions and uncertified computing devices and applications used by others, such as cabin crew, ground crew, air traffic control, passengers etc. Uncertified applications can offer certain benefits over certified applications, and connectivity between certified and uncertified applications continues to increase and become more robust. As a result, an increasing number of non-safety critical functionalities, e.g., takeoff performance predictions, are being developed as uncertified applications rather than as certified applications. An uncertified remote client application may comprise a variety of elements hosted outside the avionics bay, such as, for example, a portable electronic flight bag (EFB), an installed EFB, or an external client such as a ground center.

Eventually, many developers hope to achieve the "connected aircraft," in which certified and uncertified applications will work together seamlessly. Such increased connectivity would bring a number of advantages to the aerospace industry. For example, some of the benefits may include: (a) improving flight safety by providing both flight crews and air traffic control with increased situational awareness; (b) providing savings to airliners by cutting down fuel consumption, maintenance costs, flight delays, etc.; and (c) improving customer satisfaction by providing a variety of quality services.

The ongoing development of connected aircraft is being enabled and facilitated by a number of industry trends, such as big data analysis, real time maintenance, quick development of new avionics, etc. As these trends continue, many developers strive to efficiently and effectively access real time aircraft data generated every flight leg. To enable the connectivity with avionics, a number of potential solutions have emerged, such as AID/data taps, which would take the data from an avionics bus and provide it to remote client applications. While the data tap solution can provide a large amount of data, it also suffers from a number of drawbacks.

For example, the data tap solution fails to make available on existing I/O busses a significant amount of valuable information internal to the avionics. In addition, although the data tap solution can fetch data from the bus, it cannot send data back into the avionics from the remote client applications. Also, certain bus data follows proprietary protocols, which may be difficult to decode on the remote client. Additionally, because data is accessible to remote clients only when it is made available on the bus, the remote client cannot control the timing of data accessibility, i.e., no demand driven facility is available. The data tap solution also requires remote clients to manage variations in data formats, which vary for different aircrafts and platforms. Data tap solutions also must ingest all traffic on the busses to be monitored, rather than enabling remote clients to request data and receive only the requested data. In some cases with high volumes of data traffic, the data tap approach may take too much time to be received by the remote client applications.

In order to overcome the drawbacks of data taps, some developers have proposed updating the avionics to directly receive and service dynamic data requests. This approach, however, can introduce other serious disadvantages. For example, making the avionics directly serve remote client applications could adversely impact the performance, functionality and availability of the avionics application, due to dealing with low DAL level remote client applications. In addition, implementation of client management request algorithms may suffer from delays and a long time to market timetable, due to the high cost of developing and certifying such client request management algorithms.

The present application discloses a new avionics system comprising an avionics data access function (ADAF), which acts as a multi-mode data acquisition agent for one or more onboard avionics control functions and serves the requests from one or more remote client applications. In some embodiments, ADAF comprises a separate space- and time-partitioned module, which handles retrieving data from the onboard avionics and transmitting the data to the remote client application(s) in the appropriate format.

In one embodiment, a system comprises an aircraft having a processor with one or more certified on-board avionics control functions configured to control the operation of the aircraft, each such certified on-board avionics control function having a corresponding data access component. The system further comprises one or more uncertified computing devices, each such uncertified computing device having one or more uncertified client applications configured to communicate with the certified on-board avionics control function(s); and an avionics data access function (ADAF) located on-board the aircraft, in communication with the data access component(s) and with the uncertified client application(s). The ADAF is configured to control access to the certified on-board avionics control function(s) through the corresponding data access component(s). The ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

The available data sources may comprise one or more avionics control functions via their respective data access components, one or more avionics port or bus data, one or more shared memories, one or more avionics non-volatile memories, or one or more avionics databases. The ADAF may be configured to select one or more data sources based on a loadable configuration database. The system may further comprise a gateway in communication with the ADAF via an avionics bus and with the uncertified computing device(s) via a wireless communication link.

The ADAF may be built using software product line (SPL) architecture. The ADAF may configured to provide data in one or more standard formats, such as A834, FIXM, JSON, XML, or raw binary. The ADAF may be configured to support periodic data transactions, event-driven data transactions, or request-driven data transactions. The ADAF may be configured to enable connections with uncertified client application(s) over one or more of the following buses: Ethernet, ASCB, AFDX, A429, or RS232. The ADAF may be configured to operate on one or more of the following host operating systems: Windriver VxWorks, DEOS, or APEX. The system may further comprise a random access memory. The ADAF may be configured to compress or encrypt data before transmission. The ADAF may be configured to provide protocol management for one or more of the following communications protocols: TCP/IP, TFTP, or A834.

In another embodiment, a system comprises an aircraft having a first processor card comprising one or more certified on-board avionics control functions configured to control the operation of the aircraft, each such certified on-board avionics control function having a corresponding data access component. The system further comprises one or more uncertified computing devices, each such uncertified computing device having one or more uncertified client applications configured to communicate with the certified on-board avionics control function(s); and a second processor card comprising an avionics data access function (ADAF) located on-board the aircraft, in communication with the data access component(s) and with the uncertified client application(s). The ADAF is configured to control access to the certified on-board avionics control function(s) through the corresponding data access component(s). The ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

The available data sources may comprise one or more avionics control functions via their respective data access components, one or more avionics port or bus data, one or more shared memories, one or more avionics non-volatile memories, or one or more avionics databases. The ADAF may be configured to select one or more data sources based on a loadable configuration database. The system may further comprise a gateway in communication with the ADAF via an avionics bus and with the uncertified computing device(s) via a wireless communication link.

In another embodiment, a system comprises an aircraft having a first processor card comprising one or more certified on-board avionics control functions configured to control the operation of the aircraft, each such certified on-board avionics control function having a corresponding data access component; and a second processor card comprising one or more certified on-board avionics control functions configured to control the operation of the aircraft, each such certified on-board avionics control function having a corresponding data access component. The system further comprises one or more uncertified computing devices, each such uncertified computing device having one or more uncertified client applications configured to communicate with the certified on-board avionics control function(s); and a third processor card comprising an avionics data access function (ADAF) located on-board the aircraft, in communication with the data access component(s) and with the uncertified client application(s). The ADAF is configured to control access to the certified on-board avionics control function(s) through the corresponding data access component(s). The ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

The available data sources may comprise one or more avionics control functions via their respective data access components, one or more avionics port or bus data, one or more shared memories, one or more avionics non-volatile memories, or one or more avionics databases. The ADAF may be configured to select one or more data sources based on a loadable configuration database. The system may further comprise a gateway in communication with the ADAF via an avionics bus and with the uncertified computing device(s) via a wireless communication link.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates one embodiment of an avionics system having an Avionics Data Access Function (ADAF);
Figure 2 illustrates an alternative embodiment of an avionics system, in which ADAF is installed on a different card than avionics;
Figure 3 illustrates an alternative embodiment of an avionics system, in which ADAF can fetch data from multiple avionics for one or more remote client applications;

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The present application describes systems and methods to enable a server-client communication model between certified avionics applications and uncertified remote client applications. An avionics software component can act as a multi-mode data acquisition agent for one or more avionics onboard and serve requests from one or more remote client applications. The systems and methods described herein advantageously exhibit minimal impact to avionics applications in terms of cost, schedule, performance, and availability.

The application describes an avionics system comprising ADAF, a separate space and time partitioned module, which handles retrieving data from the concerned avionics and then transmitting the data to the respective remote client applications in a suitable format. As described in more detail below, ADAF can advantageously enable client applications to retrieve avionics data by using APIs to blend data from multiple data sources, such as avionics bus/port, avionics shared memory, avionics non-volatile memory (NVM), avionics internal data from one or more sources, etc. In some cases, ADAF enables blending data from multiple sources including internal data from two or more avionics. ADAF can also provide a configuration-driven data acquisition list, and can enable different types of data transfers, such as periodic, aperiodic, event-driven, etc. ADAF can also protect avionics from too frequent requests via rate control and caching, for example.

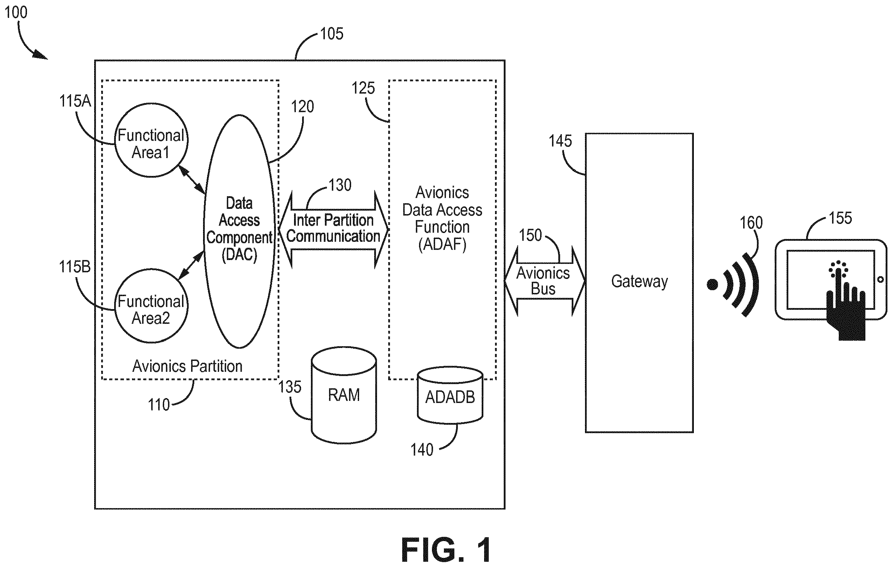

Figure 1 illustrates an exemplary embodiment of an avionics system 100 comprising a processor 105 with an avionics partition 110 having a plurality of certified on-board avionics control functions 115A, 115B in communication with a corresponding data access component (DAC) 120. The avionics partition 110 is in communication with ADAF 125 having an avionics data access database (ADADB) 140, via a suitable inter-partition communication link 130. In some embodiments, ADAF 125 is implemented using a DO178C DAL E partition, and the inter-partition communication link 130 comprises an A653 port, shared memory, or another suitable communication means.

The processor 105 further comprises a random access memory (RAM) 135. In addition, the avionics system 100 further comprises a gateway 145 in communication with the processor 105 via an avionics bus 150. The gateway 145, in turn, is in communication with one or more uncertified computing devices 155 via a suitable communication link 160, such as a wireless communication link. In the embodiment shown in Figure 1, ADAF 125 resides along with the certified avionics control functions 115 of interest, e.g., flight management system (FMS), in the same processor card, sharing the same processor 105. In some embodiments, the uncertified computing device(s) 155 host one or more remote client applications that are complementary to primary cockpit systems and have minimal impact on the real-time operation of the FMS. For example, the uncertified computing device(s) 155 may host applications such as an EFB flight planning app, a weather app that retrieves FMS flight plan data, etc.

In operation, ADAF 125 establishes a protocol with the certified avionics control functions 115 to fetch data from the certified avionics control functions 115. In addition, ADAF 125 also establishes a protocol with one or more external applications hosted in the uncertified computing device 155, or remote client, via the gateway 145. ADADB 140 acts as a core configuration file used by ADAF 125 to determine parameters such as: (a) what data is to be given; (b) which client is to be given data; (c) what rate the data is to be given; (d) which format to provide the data; (e) how much can the data be given; and (f) when to start and stop the data transmission.

In some embodiments, ADAF 125 provides a user interface in which data is made available to remote client applications in a number of different data sets. While the remote clients may have read access to the data sets, in some cases ADAF 125 will not support changes to FMS data. ADAF 125 governs access to data sets in accordance with parameters saved in ADADB 140. For example, a first parameter *X* may establish a number of different FPLN data sets remote clients can access, a second parameter *Y* may establish a number of different non-FPLN data sets remote clients can access, and a third parameter *Z* may establish a periodic rate at which remote clients can access such data sets. In this example, parameters *X, Y* and *Z* can advantageously be defined based on factors such as the capability of the hardware, FMS, etc., so as not to negatively impact the FMS operation. In some cases, if a runtime request is received requesting data that is not defined as allowed by the ADADB 140, the ADAF 125 will respond with a meaningful message indicating that data is not available.

In some embodiments, ADAF 125 is built using software product line (SPL) architecture, which advantageously enables it to have a number of plug-and-play components that can be used to quickly build a new solution for new configurations with new features, such as hardware, operating system (OS), bus, clients, algorithms, etc. In other embodiments, ADAF 125 can be built using a variety of other suitable architectures aside from SPL.

ADAF may provide a number of distinct and advantageous features over existing systems and methods. For example, ADAF may provide a data source abstraction feature, which makes data available to a client from one or more sources, which are abstracted from the client. Depending on the availability of the source and priority order, ADAF can choose the data from a number of sources, such as: (a) avionics bus or avionics output port - the data is made available into the bus/port by the avionics; ADAF can consume the data and send to the client; (b) shared memory - the data is made available in a shared memory region; ADAF can read the required data and send to the client; (c) NVM - the data is made available in a NVM; ADAF can read the required data and send to the client; (d) internal data - the data is made available by a client/server protocol between ADAF and the avionics; ADAF acts as the server while the avionics acts as the client; (e) aircraft database data - there are several databases loaded into the avionics card such as NAVDB, AEDB, OPC, etc.; client applications can acquire these data via ADAF; (f) mixed sources - data set could be formed by collecting individual set of data from more than one data source, e.g., from bus/port data, shared memory, NVM, internal data, aircraft database data.

In addition, ADAF may provide APIs to provide data in various standard formats, such as A834, FIXM, etc. ADAF may also support multiple mechanisms of data transactions such as periodic, event-driven, request-driven, etc. ADAF can allow client applications to subscribe to one or more data events for a given data, e.g., which event should trigger a transmission. In some cases, ADAF may be configuration driven, meaning the subscription list for data and the client data needs may vary from program to program, avionics to avionics, airliner to airliner, client to client, etc. In such cases, ADAF can allow these data attributes to be configured via a separate loadable file, ADADB. ADAF can acquire data from more than one avionics application and can be application-independent, meaning that ADAF can blend data from multiple avionics along with other data sources while compiling one data set. ADAF can also protect the avionics from too frequent data requests from rogue client applications by, for example, maintaining the rate at which avionics can be accessed, or caching the response for a given request and providing the cached responses to multiple clients or repeat requestors.

Additionally, ADAF 125 may provide a bus abstraction feature, which enables connections with remote client apps on one or more uncertified computing devices 155 over a variety of buses, such as Ethernet, ASCB, AFDX, A429, RS232, etc. ADAF 125 also may provide an OS abstraction feature, which enables the avionics system 100 to operate a variety of host operating systems, such as Windriver VxWorks, DEOS, APEX, etc. ADAF 125 also may provide an avionics variation abstraction feature, which enables ADAF 125 to take data from a number of different aircraft baselines, such as A320, A340, A350, A380, B747, B777x, B757, E2, ERJ, G450, G650, DF7X, etc. In addition, ADAF 125 may support a variety of data formats for remote client apps, such as JSON, XML, raw binary, FIXM, etc. ADAF 125 also may provide a data standardization feature, which enables raw data from certified avionics control function(s) 115 to be converted to a standard format using data collection, data filtering, and/or data formatting in ADAF 125. ADAF 125 also may provide a data access mechanism, which enables data to be transmitted periodically or on a demand-driven or event-driven basis. ADAF 125 also may provide data compression and/or data encryption features, which enable data to be compressed and/or encrypted before transmission. In addition, ADAF 125 may provide protocol management for a variety of communications protocols, such as TCP/IP, TFTP, A834, custom protocols, etc. ADAF 125 also may provide a number of data accounting algorithms. ADAF 125 also may enable efficient client management using caching techniques. ADAF 125 also may provide a data collection mechanism, which enables data to be collected directly from the avionics, or from the bus 150, or from the non-volatile memory.

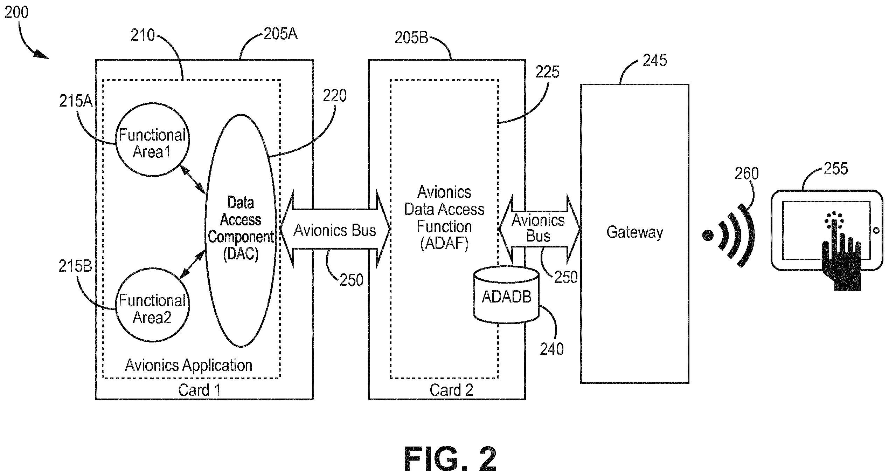

In some cases, ADAF cannot be loaded into the same card in which the certified avionics control functions are running, for a variety of reasons. In such cases, as shown in Figure 2, ADAF 225 can be hosted in a different card. In the embodiment shown in Figure 2, an avionics system 200 comprises a first processor card 205A with an avionics partition 210 having a plurality of certified on-board avionics control functions 215A, 215B in communication with a DAC 220. The avionics system 200 further comprises a second processor card 205B hosting ADAF 225 with ADADB 240, as well as a gateway 245 in communication with an uncertified computing device 255 via a suitable communication link 260, such as a wireless communication link. ADAF 225 is in communication with both avionics partition 210 and gateway 245 via avionics bus 250.

In operation, ADAF 225 performs similar functions in avionics system 200 as ADAF 125 described above in connection with Figure 1. In the embodiment shown in Figure 2, however, ADAF 225 communicates with certified onboard avionics control function(s) 215, such as FMS, via avionics bus 250, and thus may exhibit somewhat slower response time to remote client applications.

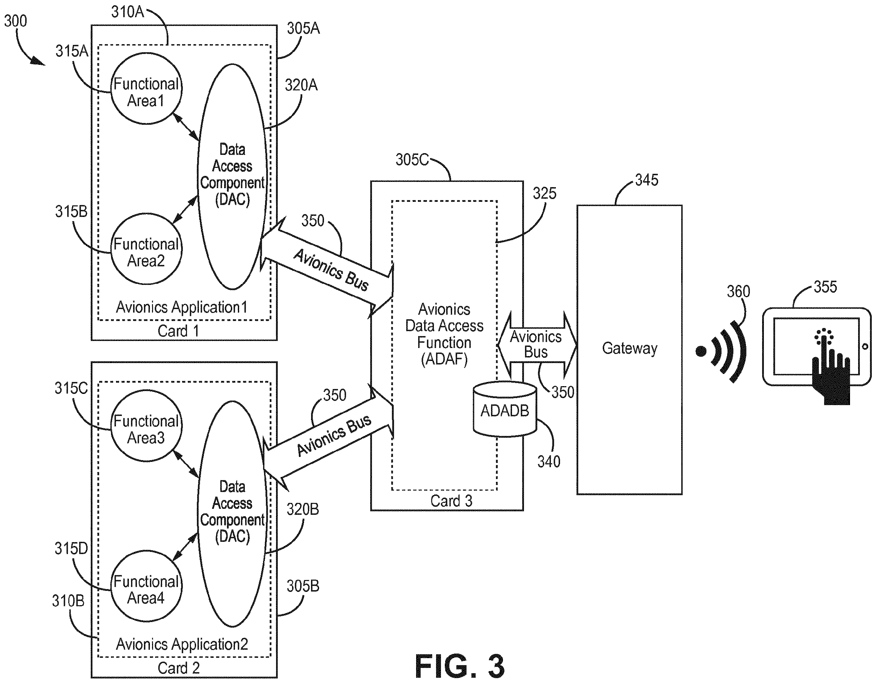

Figure 3 illustrates an alternative embodiment of an avionics system 300, in which ADAF 325 can fetch data from multiple avionics for one or more remote client applications. In the embodiment shown in Figure 3, avionics system 300 comprises a first processor card 305A with a first avionics partition 310A having a plurality of certified on-board avionics control functions 315A, 315B in communication with a first DAC 320A. The avionics system 300 further comprises a second processor card 305B with a second avionics partition 310B having a plurality of certified on-board avionics control functions 315C, 315D in communication with a second DAC 320B. The avionics system 300 further comprises a third processor card 305C hosting ADAF 325 with ADADB 340, as well as a gateway 345 in communication with an uncertified computing device 355 via a suitable communication link 360, such as a wireless communication link. ADAF 325 is in communication with avionics partitions 310A, 310B and gateway 345 via avionics bus 350.

In operation, ADAF 325 performs similar functions in avionics system 300 as ADAF 125 described above in connection with Figure 1. In the embodiment shown in Figure 3, however, ADAF 325 communicates with certified onboard avionics control function(s) 315, such as FMS, via avionics bus 350, and thus may exhibit somewhat slower response time to remote client applications.

As described above, ADAF may exhibit a number of distinct advantages over existing systems and methods. For example, ADAF may comprise a space and time partitioned process dedicated to get and/or set the internal data of one or more associated avionics applications. ADAF may be application-independent, i.e., ADAF need not be tied down to a particular avionics application. ADAF can also simultaneously connect with more than one avionics application. ADAF may provide data in various standard formats such as JSON, XML, A834, FIXM, etc. ADAF can support different clients simultaneously of different DAL each. In some cases, ADAF can control the access to a server application, deciding the rate a data request can be posted to the server application, regardless of the rate at which the client has requested. ADAF can also provide response data buffering, i.e., for a given request, the response is buffered for a given time period after which another response is acquired from the server application, ensuring that redundant requests from the client are handled without any impact to the server application. In addition, ADAF can be driven by a loadable configuration file giving the information on what parameter the user needs, at what rate, what format, when it has to be triggered, etc. The loadable configuration file can be tailored and loaded without a need to change the loaded software. ADAF can also support different kinds of transmission of parameters, such as periodic, aperiodic, event driven, data volume based (restricted by the number of bytes that could be transmitted), etc. ADAF can also advantageously enable users to transfer dynamic trigger or filter algorithms during run time. In addition, ADAF can enable users to acquire data from various avionics databases loaded into the avionics bay. ADAF also allows application-specific processing logic to be loaded as a separate entity, e.g., DLL, SPL component, etc., so that the design can work with various kinds of avionics. In some cases, ADAF can be placed: (a) in the same box or LRM as that of the server avionics application, (b) in the same avionics bus network but in a different box or LRM, or (c) out of the avionics bus network, e.g., in a remote client, etc. In some cases, ADAF can work in "split" mode, in which a first ADAF component is hosted in the same box, LRM or card as the avionic server application is running, while a second ADAF component is hosted in the same box, LRM or remote client in which a client application is running.

Although specific embodiments have been illustrated and described herein, it will be appreciated by those of ordinary skill in the art that any arrangement, which can achieve the same purpose, may be substituted for the specific embodiments shown. Therefore, it is manifestly intended that this invention be limited only by the claims and the equivalents thereof.

### EXAMPLE EMBODIMENTS

In one embodiment, a system comprises an aircraft having a processor with one or more certified on-board avionics control functions configured to control the operation of the aircraft, each such certified on-board avionics control function having a corresponding data access component. The system further comprises one or more uncertified computing devices, each such uncertified computing device having one or more uncertified client applications configured to communicate with the certified on-board avionics control function(s); and an avionics data access function (ADAF) located on-board the aircraft, in communication with the data access component(s) and with the uncertified client application(s). The ADAF is configured to control access to the certified on-board avionics control function(s) through the corresponding data access component(s). The ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

The available data sources may comprise one or more avionics control functions via their respective data access components, one or more avionics port or bus data, one or more shared memories, one or more avionics non-volatile memories, or one or more avionics databases. The ADAF may be configured to select one or more data sources based on a loadable configuration database. The system may further comprise a gateway in communication with the ADAF via an avionics bus and with the uncertified computing device(s) via a wireless communication link.

The ADAF may be built using software product line (SPL) architecture. The ADAF may configured to provide data in one or more standard formats, such as A834, FIXM, JSON, XML, or raw binary. The ADAF may be configured to support periodic data transactions, event-driven data transactions, or request-driven data transactions. The ADAF may be configured to enable connections with uncertified client application(s) over one or more of the following buses: Ethernet, ASCB, AFDX, A429, or RS232. The ADAF may be configured to operate on one or more of the following host operating systems: Windriver VxWorks, DEOS, or APEX. The system may further comprise a random access memory. The ADAF may be configured to compress or encrypt data before transmission. The ADAF may be configured to provide protocol management for one or more of the following communications protocols: TCP/IP, TFTP, or A834.

In another embodiment, a system comprises an aircraft having a first processor card comprising one or more certified on-board avionics control functions configured to control the operation of the aircraft, each such certified on-board avionics control function having a corresponding data access component. The system further comprises one or more uncertified computing devices, each such uncertified computing device having one or more uncertified client applications configured to communicate with the certified on-board avionics control function(s); and a second processor card comprising an avionics data access function (ADAF) located on-board the aircraft, in communication with the data access component(s) and with the uncertified client application(s). The ADAF is configured to control access to the certified on-board avionics control function(s) through the corresponding data access component(s). The ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

The available data sources may comprise one or more avionics control functions via their respective data access components, one or more avionics port or bus data, one or more shared memories, one or more avionics non-volatile memories, or one or more avionics databases. The ADAF may be configured to select one or more data sources based on a loadable configuration database. The system may further comprise a gateway in communication with the ADAF via an avionics bus and with the uncertified computing device(s) via a wireless communication link.

In another embodiment, a system comprises an aircraft having a first processor card comprising one or more certified on-board avionics control functions configured to control the operation of the aircraft, each such certified on-board avionics control function having a corresponding data access component; and a second processor card comprising one or more certified on-board avionics control functions configured to control the operation of the aircraft, each such certified on-board avionics control function having a corresponding data access component. The system further comprises one or more uncertified computing devices, each such uncertified computing device having one or more uncertified client applications configured to communicate with the certified on-board avionics control function(s); and a third processor card comprising an avionics data access function (ADAF) located on-board the aircraft, in communication with the data access component(s) and with the uncertified client application(s). The ADAF is configured to control access to the certified on-board avionics control function(s) through the corresponding data access component(s). The ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

The available data sources may comprise one or more avionics control functions via their respective data access components, one or more avionics port or bus data, one or more shared memories, one or more avionics non-volatile memories, or one or more avionics databases. The ADAF may be configured to select one or more data sources based on a loadable configuration database. The system may further comprise a gateway in communication with the ADAF via an avionics bus and with the uncertified computing device(s) via a wireless communication link.

## Claims

1. A system comprising:
an aircraft having a processor with one or more certified on-board avionics control functions configured to control the operation of the aircraft, each such certified on-board avionics control function having a corresponding data access component;
one or more uncertified computing devices, each such uncertified computing device having one or more uncertified client applications configured to communicate with the certified on-board avionics control function(s); and
an avionics data access function (ADAF) located on-board the aircraft, in communication with the data access component(s) and with the uncertified client application(s),
wherein the ADAF is configured to control access to the certified on-board avionics control function(s) through the corresponding data access component(s), and
wherein the ADAF is further configured to enable bi-directional communications between the certified on-board avionics control function(s) and the uncertified client application(s) by converting data transmitted from a uncertified client application to a certified on-board avionics control function to a first suitable communications protocol, by converting data transmitted from the certified on-board avionics control function to the uncertified client application to a second suitable communications protocol, and by obtaining data requested by the uncertified client application from one or more available data sources such that the data source(s) are abstracted from the uncertified client application.

2. The system of claim 1, wherein the available data sources comprise one or more avionics control functions via their respective data access components, one or more avionics port or bus data, one or more shared memories, one or more avionics non-volatile memories, or one or more avionics databases.

3. The system of claim 1, wherein the ADAF is configured to select one or more data sources based on a loadable configuration database.

4. The system of claim 1, further comprising a gateway in communication with the ADAF via an avionics bus and with the uncertified computing device(s) via a wireless communication link.

5. The system of claim 1, wherein the ADAF is built using software product line (SPL) architecture.

6. The system of claim 1, wherein the ADAF is configured to provide data in one or more of the following standard formats: A834, FIXM, JSON, XML, or raw binary.

7. The system of claim 1, wherein the ADAF is configured to support periodic data transactions, event-driven data transactions, or request-driven data transactions.

8. The system of claim 1, wherein the ADAF is configured to enable connections with uncertified client application(s) over one or more of the following buses: Ethernet, ASCB, AFDX, A429, or RS232.

9. The system of claim 1, wherein the ADAF is configured to operate on one or more of the following host operating systems: Windriver VxWorks, DEOS, or APEX.

10. The system of claim 1, further comprising a random access memory.
